# EUROPÄISCHE PATENTANMELDUNG

(11) **EP 2 433 528 A1**
(43) Veröffentlichungstag der Anmeldung: **28.03.2012**
(21) Anmeldenummer: 11182562.6
(22) Anmeldetag: 23.09.2011
(51) Int. Cl.: A47J 36/02, A47J 36/06, B65D 47/08

(54) **Behälter für Lebensmittel**

(30) Priorität: 27.09.2010 DE 102010046675
(71) Anmelder: CASA SI Marketing und VertriebsgmbH., 1190 Wien (AT); Gondol Plastic Sanayi ve Dis Ticaret Limited Sirketi, 34217 Istanbul (TC)
(72) Erfinder: Schauerhuber, Hermann Oliver, 3002 Purkersdorf (AT); Akcebe, Mehmet, 34217 Istanbul (TR)
(74) Vertreter: Epping - Hermann - Fischer

(57) **Zusammenfassung**

Es wird ein Behälter für Lebensmittel vorgeschlagen, der einen Deckel (10) aufweist, der folgendes aufweist:
- zumindest eine erste Lochöffnung (11) und eine zweite Lochöffnung (12),
- eine auf der Außenseite (10a) des Deckels (10) angebrachte Verschlusseinrichtung (5) mit einem ersten (1) und einem zweiten Griffelement (2), mit denen die erste (11) und die zweite Lochöffnung (12) unabhängig voneinander verschließbar sind,

wobei das erste (1) und/oder das zweite Griffelement (2)
- schwenkbar oder anderweitig beweglich ist,
- einen Vorsprung (6, 7) aufweist und
- in einer Position, in der es die jeweilige Lochöffnung (11, 12) verschließt, einen an die jeweilige Lochöffnung heranreichenden oder umgebenden Teilabschnitt des Deckels (10) von der Außenseite (10a) her überdeckt und auf der Außenseite (10a) des Deckels (10) ein Aufbewahrungsfach (18) für ein Etikett ausbildet, wobei in der Position, in der die jeweilige Lochöffnung (11, 12) verschlosen ist, der Vorsprung (6, 7) in die jeweilige Lochöffnung (11, 12) eingreift.

## Beschreibung

Die Erfindung betrifft einen Behälter für Lebensmittel. Zur Aufbewahrung von Lebensmitteln sowie zum Aufheizen, insbesondere mit Hilfe einer Mikrowelle, kommen Kunststoffbehälter zum Einsatz, deren Deckel, sofern er randseitig luftdicht verschlossen ist, eine zusätzliche Öffnung zum Druckausgleich und insbesondere zum Entweichen von Wasserdampf aufweist. Eine solche lochförmige Öffnung dient dabei nicht zur Entnahme oder zum Einfüllen des Lebensmittels, da der Deckel als Ganzes von einem Unterteil des Behälters abnehmbar ist. Unterteil und Deckel sind beispielsweise aus Kunststoff, wobei ein Deckelrand aus Silikon oder einem anderen geeigneten Material für die feste Anbringung am Unterteil sorgt.

Problematisch bei solchen Behältern ist die Beschriftung, insbesondere wenn der Behälterinhalt - Lebensmittel einschließlich Flüssigkeiten - über längere Zeit eingefroren und später wieder aufgetaut bzw. in der Mikrowelle erhitzt werden soll. Ein aufgeklebtes Etikett ist mitunter schwer wieder zu entfernen; dasselbe gilt für die Beschriftungen mit wasserfesten Stiften. Ein loses Etikett, das erneuerbar bzw. austauschbar ist, lässt sich hingegen nur umständlich an dem Behälter anbringen und würde außerdem beim Spülen durchnässt.

Es wäre wünschenswert, hierfür eine pragmatische und preiswerte Lösung zu finden. Insbesondere soll ein Behälter bereitgestellt werden, dessen Inhalt auf einfache Weise und auch wiederholt beschriftbar ist, ohne dass Nachteile in der Handhabung des Behälters und beim Beschriften entstehen. Diese Aufgabe wird durch einen Behälter gemäß Anspruch 1 gelöst. Der Behälter kann weiterhin wie in den Unteransprüchen und in den sonstigen Teilen dieser Anmeldung beschrieben weitergebildet werden.

Es wird vorgeschlagen, am Deckel des Behälters zwei Lochöffnungen vorzusehen, vorzugsweise etwa in der Mitte des Deckels bzw. Deckelbodens. Jede Lochöffnung eignet sich einzeln zum Druckausgleich bzw. Entweichen von Wasserdampf. Zumindest eine der Lochöffnungen jedoch dient zur Sicherung eines Etiketts zur Kennzeichnung des Behälterinhalts.

Außen am Deckel ist eine Verschlusseinrichtung vorgesehen, die nicht zur Anbringung des Deckels auf dem Unterteil, sondern zum Verschließen und Öffnen einer oder beider Lochöffnungen dient. Die Verschlusseinrichtung besitzt ein erstes und ein zweites Griffelement, beispielsweise schwenkbare Klappen, die sich auf- und zudrücken lassen. In derjenigen (heruntergedrückten) Position, in der die Griffelemente die jeweilige Lochöffnung verschließen, überdecken sie einen die Lochöffnung umgebenden oder zumindest an die Lochöffnung heranreichenden Flächenabschnitt des Deckels bzw. seiner Grundfläche von außen her. Zwischen der heruntergeklappten Klappe und dem dadurch überdeckten Teilabschnitt des Deckels ist ein Aufbewahrungsfach für ein Etikett bzw. einen geeignet geformten Beschriftungszettel ausgebildet. Erfindungsgemäß ist der Behälter nicht nur so ausgebildet, dass der Zettel in dieser vorgesehenen Aussparung Platz findet, sondern zusätzlich besitzt das jeweilige Griffelement einen Vorsprung, der beim Verschließen des Griffelements in die jeweilige Lochöffnung unter ihm eingreift und diese beispielsweise verschließt oder gar vollständig ausfüllt. Dieser Vorsprung, der beispielsweise aus unterseitiger Dorn oder oder anderweitiger stiftförmiger Fortsatz ausgeformt sein kann, erstreckt sich somit durch das zur Aufbewahrung des Etiketts vorgesehenen Volumen des Aufbewahrungsfachs hindurch. Dadurch wird erfindungsgemäß erreicht, dass ein eingelegtes Etikett nach Herunterdrücken des Griffelements gegen Verrutschen und/oder Herausfallen gesichert ist und somit bei der Handhabung des Behälters nicht stört. Gleichzeitig ist das Etikett durch das Griffelement gegen Feuchtigkeit beim Spülen und so weiter geschützt.

Eine der beiden Lochöffnungen dient somit zur Fixierung und Sicherung eines Etiketts, wohingegen die andere Lochöffnung zum Druckausgleich der Mikrowelle geöffnet wird. Zum Austausch des Etiketts wird das über der ersten Lochöffnung und dem Aufbewahrungsfach angeordnete Griffelement hochgeschwenkt oder anderweitig geöffnet. Optional können auch beide Griffelemente so ausgebildet sein, dass sie wahlweise zum Druckausgleich bzw. Entweichen von Wasserdampf oder zur Aufbewahrung eines Etiketts verwendbar sind. Somit können auch unter beiden Griffelementen jeweilige Aufbewahrungsfächer vorgesehen sein. Alternativ kann der Deckel im Bereich beider Griffelemente so ausgebildet sein, dass jedes Griffelement nur für eine der beiden Funktionen zum Einsatz kommt.

Das Etikett selbst ist mit einer Lochstanzung versehen, vorzugsweise in der Mitte oder jedenfalls innerhalb seiner Etikettengrundfläche, alternativ auch am Etikettenrand in Form einer Einbuchtung oder Einkerbung. Bei verschlossenem Griffelement greift der unterseitige Vorsprung bzw. Dorn durch den ausgestanzten Bereich hindurch und darunter in die entsprechende Lochöffnung des Deckelbodens ein.

Beide Griffelemente sind Bestandteil einer Verschlussvorrichtung, zum Beispiel eines Kunststoffteils etwa in der Mitte des Deckels. Es können weitere Lochöffnungen im Deckel und weitere Vorsprünge in der Verschlusseinrichtung (bzw. dem Kunststoffteil) vorgesehen sein, um letztere dauerhaft an dem Deckel zu montieren. Dabei greifen die weiteren Vorsprünge der Verschlusseinrichtung in die weiteren Lochöffnungen des Deckelbodens ein. Vorzugsweise alle, zumindest jedoch eine der Lochöffnungen, die unter einem der Griffelemente angeordnet ist, erstreckt sich durch den gesamten Deckelboden bzw. Deckel hindurch, um ein Entweichen von Dampf in der Mikrowelle zu ermöglichen. Der Behälter und/oder der Deckel ist vorzugsweise aus Kunststoff und insbesondere transparent.

Einige Ausführungsbeispiele werden nachstehend mit Bezug auf die Figuren beschrieben. Es zeigen:
Figur 1 eine schematische Draufsicht auf einen erfindungsgemäß ausgebildeten Deckel,
Figur 2 eine schematische Draufsicht auf eine Verschlusseinrichtung eines Deckels, wie in Figur 1, hier jedoch mit kreisförmiger Grundfläche,
Figur 3 eine ausschnittweise Querschnittsansicht eines Behälters für Lebensmittel,
Figur 4 eine Draufsicht auf die Verschlusseinrichtung des Deckels des Behälters aus Figur 3 und
Figur 5 eine detaillierte schematische Querschnittsansicht des Deckels des Behälters aus den Figuren 3 und 4.

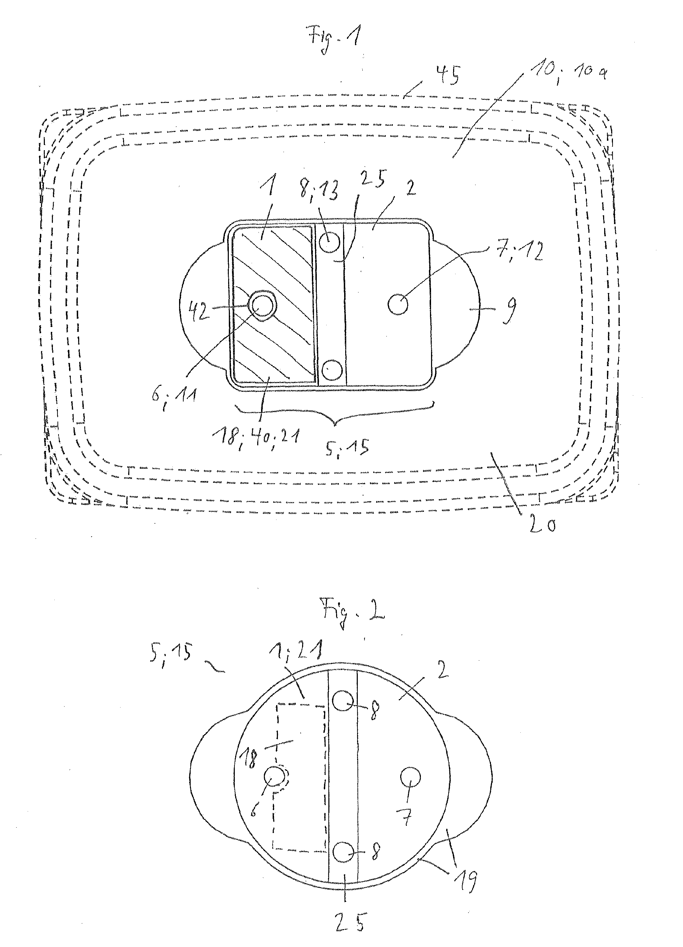

Figur 1 zeigt in schematischer Draufsicht ein Ausführungsbeispiel eines erfindungsgemäß ausgebildeten Deckels, dessen Au-ßenrand 45 nur gestrichelt angedeutet ist. Etwa in der Mitte des Deckels 10 ist auf seiner dargestellten Außenseite 10a eine Verschlusseinrichtung 5 vorgesehen, die beispielsweise als spezielles Kunststoffteil 15 ausgebildet sein kann. Im eigentlichen Deckelboden 20, der die Grundfläche des Deckels innerhalb des Außenrandes 45 überspannt, sind unterhalb der Verschlusseinrichtung 5 eine erste Lochöffnung 11 und eine zweite Lochöffnung 12 vorgesehen. Über ihnen befinden sich bewegliche, etwa schwenkbare Griffelemente 11, 12, die auf ihrer Unterseite einen dornförmigen oder anderweitig ausgebildeten Vorsprung 6, 7 aufweisen, mit denen sie in die erste und zweite Lochöffnung 11, 12 eingreifen und diese verschlie-Ben. Mit Hilfe eines Verbindungssteges 25 sind beide Griffelemente 1, 2 aneinander befestigt; das Kunststoffteil 15 ist weiterhin mit Hilfe weiterer Vorsprünge 8, welche in weitere Lochöffnungen 13, 14 des Deckelbodens 20 eingreifen, am Deckelboden montiert, und zwar von der Außenseite des Deckels 10 her. Die weiteren Lochöffnungen 13, 14 können auch Vertiefungen sein, die nicht zur Unterseite des Deckelbodens reichen. Jedoch muss mindestens eine der beiden Lochöffnungen 11 und 12 die gesamte Dicke des Deckels bzw. Deckelbodens durchqueren, damit bei randseitig verschlossenem Deckel ein Druckausgleich und Dampfaustritt möglich ist, wenn der Behälterinhalt in einer Mikrowelle erhitzt wird. Das Kunststoffteil 15 der Verschlusseinrichtung 5 ist insbesondere transparent; unter dem ersten Griffelement 1 befindet sich ein Aufbewahrungsfach 18 für ein Etikett 40, mit dem der Behälterinhalt gekennzeichnet ist oder kennzeichenbar ist. Im Etikett befindet sich ein Loch 42 in Form einer Aussparung oder Ausstanzung, durch die hindurch der nach unten weisende Vorsprung 6 des ersten klappbaren Griffelements 1 hindurchreicht, wenn das erste Griffelement 1 heruntergeklappt ist und dann in die erste Lochöffnung 1 des Deckelbodens eingreift. Dabei wird nicht nur das erste Griffelement 1 in seiner geschlossenen Position fixiert und die erste Lochöffnung 1 verschlossen, sondern auch das Etikett 40 innerhalb des Aufbewahrungsfachs 18 fixiert. Seitlich außerhalb des ersten 1 und des zweiten Griffelements 2 kann jeweils eine Greifmulde 9 zum leichteren Öffnen der Griffelemente 1, 2 vorgesehen sein.

Figur 2 zeigt exemplarisch ein weiteres Ausführungsbeispiel der Verschlusseinrichtung 5 bzw. des Kunststoffteils 15 und eine umgebende Vertiefung bzw. Absenkung im Deckelboden 20 des Deckels 10 aus Figur 1. Im Gegensatz zu Figur 1 ist die Außenkontur der Verschlusseinrichtung 5 nicht rechteckig, sondern etwa kreisförmig oder auch oval. In Figur 2 sind nur die Elemente der Verschlusseinrichtung 5 selbst sowie die Au-Benkontur einer umgebenden Absenkung 19 bzw. Vertiefung in der Außenseite 10a des Deckelbodens 20 des Deckels A dargestellt. Unterhalb eines oder beider Griffelemente 1, 2 ist ein (hier etwa halbkreisförmig ausgebildetes) Aufbewahrungsfach vorgesehen. Das Aufbewahrungsfach kann insbesondere auch nur unter einem der beiden Griffelemente vorgesehen sein und braucht sich auch nur über einen Teilbereich der Grundfläche unterhalb des Griffelements zu erstrecken. In Figur 2 beispielsweise ist ein rechteckförmiges Aufbewahrungsfach 18 unterhalb des ersten Griffelements 1 vorgesehen, das ebenso wie das einzulegende Etikett selbst eine randseitige Einbuchtung am Ort des ersten Vorsprungs 6 aufweist. Die Einbuchtung gewährleistet ebenso wie das kreisförmig ausgestanzte Loch 42 des Etiketts 40 aus Figur 1 eine sichere und zuverlässige Fixierung und Sicherung des Etiketts im Aufbewahrungsfach.

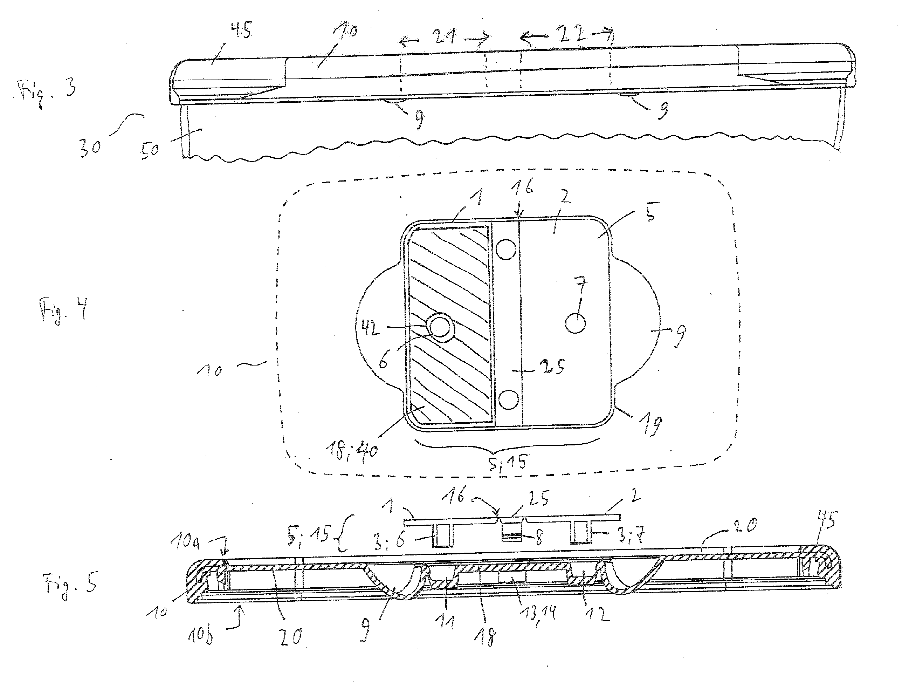

Figur 3 zeigt den zur Aufbewahrung und/oder Erwärmung von Lebensmitteln bestimmten Behälter 30 in vereinfachter Querschnittsansicht; der Deckel ist mit seinem Rand 45 (etwa aus verformbarem Silikon) an dem Unterteil 50 des Behälters 30 befestigt. Die Querschnittsansicht gemäß Figur 3 verläuft au-Berhalb der Verschlusseinrichtung, die daher nicht sichtbar ist. Jedoch sind die durch die beiden Griffelemente 1, 2 überdeckten Teilabschnitte 21, 22 des Deckelbodens bzw. des Deckels 10 angedeutet.

Figur 4 zeigt eine der Figur 2 entsprechende schematische Draufsicht auf die Verschlusseinrichtung 5 des Deckels des Ausführungsbeispiels der Figur 3, wobei die Verschlusseinrichgung 5 hier näherungsweise quadratisch ausgebildet ist und aus einem Kunststoffteil 15 besteht, das in Figur 5 oben in Querschnittsansicht dargestellt ist. Ebenso wie in Figur 1 nimmt das Aufbewahrungsfach 18 und das Etikett 10 praktisch die gesamte Grundfläche des ersten Griffelements 1 und somit den gesamten Teilabschnitt 21 (Figur 3) ein. Beide Griffelemente 1, 2 sind unabhängig voneinander über eine Gelenkverbindung 16 gegenüber dem Verbindungssteg 25 hochschwenkbar, wodurch der unterseitige Vorsprung 6, 7 aus der jeweiligen Lochöffnung 11, 12 (vergleiche Figur 1) herausgezogen wird. Das links eingelegte Etikett 40 ist dann entnehmbar, beschriftbar oder auswechselbar. Die zweite Lochöffnung 12 unterhalb des Vorsprungs 7 dient zum Druckausgleich und Dampfaustritt. Dazu wird das zweite Griffelement 2 geöffnet, sobald der mit dem Deckel 10 verschlossene Behälter 30 in die Mikrowelle zum Aufwärmen und/oder Kochen eingestellt wird. Das erste Griffelement 1 hingegen wird nur zum Auswechseln der Beschriftung bzw. des Etiketts 40 geöffnet.

Figur 5 zeigt eine detaillierte Querschnittsansicht des Deckels 10 und des dazugehörigen, aber noch nicht montierten Kunststoffteils 15, das als Verschlusseinrichtung 5 dient. Seitlich außerhalb der durch Materialdünnung gebildeten Gelenkverbindungen 16 sind das erste und das zweite Griffteil 1, 2 mit ihren nach unten weisenden Vorsprüngen 6, 7 erkennbar, die beispielsweise als Dornen 3 oder anderweitige Fortsätze zum teilweisen oder vollständigen Ausfüllen der Lochöffnungen 11, 12 dienen, in die sie im geschlossenen Zustand eingreifen. Die Griffelemente 1, 2 sind unabhängig voneinander um beispielsweise 90° hochklappbar. Der mittlere Verbindungssteg 25 wird mit Hilfe zweier weiterer Vorsprünge 8 in weiteren Lochöffnungen 13, 14 oder anderweitigen Ausnehmungen des Deckelbodens 20 montiert; eine Demontage ist danach nicht mehr vorgesehen. Die beiden Griffelemente 1, 2 hingegen werden beim Gebrauch wiederholt geöffnet und verschlossen; und zwar bei diesem Beispiel das zweite Griffelement 2 zum Erwärmen des Behälterinhalts und das erste Griffelement 1 zum Beschriften oder Auswechseln der Beschriftung des Etiketts 40. Zumindest die zweite Lochöffnung erstreckt sich vollständig durch die gesamte Dicke des Deckelbodens 20; der beim Erhitzen entstehende Wasserdampf kann hierdurch entweichen. Alternativ jedoch ist der gesamte Deckel symmetrisch ausgebildet, sodass beide Lochöffnungen 11, 12 einen Dampfaustritt ermöglichen und über beiden Lochöffnungen ein Etikett 40 unterhalb des jeweiligen Griffelements 1, 2 platzierbar (und mit Hilfe der Dornen 3 fixierbar) ist. Der in den Figuren 2 und 4 dargestellte, als Absenkung 19 vertiefte Bereich der Außenseite 10a des Deckels 10 kann die Außenmaße des Aufbewahrungsfachs 18 für das Etikett 40 zumindest teilweise festlegen. Alternativ kann auch ein kleiner dimensioniertes Aufbewahrungsfach 18 innerhalb der Absenkung 19 vorgesehen sein.

Der beschriebene Behälter ermöglicht die sichere Anbringung und Unterbringung eines Etiketts, ohne dass hierdurch die Handhabung des Behälters erschwert wird.

### Bezugszeichenliste

- 1: erstes Griffelement
- 2: zweites Griffelement
- 3: Dorn
- 4: Gelenkverbindung
- 5: Verschlusseinrichtung
- 6, 7: Vorsprung
- 8: weiterer Vorsprung
- 9: Greifmulde
- 10: Deckel
- 10a: Außenseite
- 10b: Innenseite
- 11: erste Lochöffnung
- 12: zweite Lochöffnung
- 13, 14: weitere Lochöffnung
- 15: Kunststoffteil
- 16: Gelenkverbindung
- 18: Aufbewahrungsfach
- 19: Absenkung
- 20: Deckelboden
- 21, 22: Teilabschnitt
- 25: Verbindungssteg
- 30: Behälter
- 40: Etikett
- 41: Einbuchtung
- 42: Loch
- 45: Außenrand
- 50: Unterteil

## Patentansprüche

1. Behälter (30) für Lebensmittel, wobei der Behälter (30) einen Deckel (10) aufweist, der folgendes aufweist:
- zumindest eine erste Lochöffnung (11) und eine zweite Lochöffnung (12),
- eine auf der Außenseite (10a) des Deckels (10) angebrachte Verschlusseinrichtung (5) mit einem ersten (1) und einem zweiten Griffelement (2), mit denen die erste (11) und die zweite Lochöffnung (12) unabhängig voneinander verschließbar sind,
wobei das erste (1) und/oder das zweite Griffelement (2)
- schwenkbar oder anderweitig beweglich ist,
- einen Vorsprung (6, 7) aufweist und
- in einer Position, in der es die jeweilige Lochöffnung (11, 12) verschließt, einen an die jeweilige Lochöffnung heranreichenden oder umgebenden Teilabschnitt (21, 22) des Deckels (10) von der Außenseite (10a) her überdeckt und auf der Au-Benseite (10a) des Deckels (10) ein Aufbewahrungsfach (18) für ein Etikett (40) ausbildet, wobei in der Position, in der das Griffelement (1, 2) die jeweilige Lochöffnung (11, 12) verschließt, der Vorsprung (6, 7) in die jeweilige Lochöffnung (11, 12) eingreift.

2. Behälter nach Anspruch 1,
**dadurch gekennzeichnet, dass**
die Verschlusseinrichtung (5) ein vorzugsweise einteiliges Kunststoffteil (15) ist und dass das erste (1) und das zweite Griffelement (2) voneinander abgewandte Teilstücke des Kunststoffteils (15) sind, wobei das Kunststoffteil (15) zwei durch lokal verringerte Materialstärke ausgebildete Gelenkverbindungen (4) aufweist, an denen die Griffelemente (1, 2) schwenkbar angeordnet sind.

3. Behälter nach Anspruch 2,
**dadurch gekennzeichnet, dass**
die Verschlusseinrichtung (5) zwischen beiden Griffelementen (1, 2) einen Verbindungssteg (25) aufweist, der auf der Au-Benseite (10a) des Deckels (10) montiert ist.

4. Behälter nach Anspruch 2 oder 3,
**dadurch gekennzeichnet, dass**
der Deckel (10) zum Anbringen des Kunststoffteils (15) zwei weitere Lochöffnungen (13, 14) und das Kunststoffteil (15) der Verschlusseinrichtung (5) zwei in die weiteren Lochöffnungen (13, 14) eingebrachte weitere Vorsprünge (8) aufweist.

5. Behälter nach einem der Ansprüche 2 bis 4,
**dadurch gekennzeichnet, dass**
der durch das Kunststoffteil (15) überdeckte Teilabschnitt (21, 22) des Deckels (10) abgesenkt ist, wobei das Aufbewahrungsfach (18) durch zumindest einen Teilbereich des abgesenkten Teilabschnitts (21, 22) des Deckels (10) und das jeweilige Griffelement (1, 2) gebildet ist.

6. Behälter nach einem der Ansprüche 1 bis 5,
**dadurch gekennzeichnet, dass**
der Deckel (10) seitlich außerhalb der beiden Griffelemente (1, 2) jeweils eine Greifmulde (9) zum Untergreifen des jeweiligen Griffelements (1, 2) aufweist.

7. Behälter nach einem der Ansprüche 1 bis 6,
**dadurch gekennzeichnet, dass**
der Behälter (30) ein Etikett (40) aufweist, das auf der Au-Benseite (10a) des Deckels (10) unter das Griffelement (1, 2) in das Aufbewahrungsfach (18) unter dem Griffelement (1, 2) einlegbar oder eingelegt ist.

8. Behälter nach einem der Ansprüche 1 bis 7,
**dadurch gekennzeichnet, dass**
in der Position, in der das Griffelement (1, 2) die jeweilige Lochöffnung (11, 12) verschließt, der Vorsprung (6, 7) des Griffelements das Etikett (40) gegen Verrutschen innerhalb des Aufbewahrungsfachs (18) und/oder gegen Herausfallen aus dem Aufbewahrungsfach (18) sichert.

9. Behälter nach einem der Ansprüche 1 bis 8,
**dadurch gekennzeichnet, dass**
das Etikett (40) eine Einbuchtung (41) oder ein Loch (42) aufweist, durch das hindurch sich der Vorsprung (6, 7) des jeweiligen Griffelements (1, 2) erstreckt, wenn das Griffelement (1, 2) die Lochöffnung (11, 12) verschließt.

10. Behälter nach einem der Ansprüche 1 bis 9,
**dadurch gekennzeichnet, dass**
die erste (11) und/oder die zweite Lochöffnung (12) innerhalb des Grundfläche des Aufbewahrungsfachs (18) angeordnet ist, wobei das Aufbewahrungsfach (18) und das Etikett (40) den eingreifenden Vorsprung (6, 7) des Griffelements (1, 2) umgeben.

11. Behälter nach einem der Ansprüche 1 bis 10,
**dadurch gekennzeichnet, dass**
das Etikett (40) zwischen dem Vorsprung (6, 7) des jeweiligen Griffelements (1, 2) und den beiden weiteren Vorsprüngen (8) des Verbindungssteges (25) angeordnet und durch diese Vorsprünge (6, 7, 8) gegen Verrutschen innerhalb des Aufbewahrungsfachs (18) gesichert ist.

12. Behälter nach einem der Ansprüche 1 bis 11,
**dadurch gekennzeichnet, dass**
sich der Vorsprung (6, 7) eines der beiden Griffelemente (1, 2) durch das Loch des Etiketts (40) hindurch erstreckt und dass das Etikett (40) durch die beiden Vorsprünge (8) des Verbindungssteges (25) gegen Verdrehungen um den Vorsprung des Griffelements gesichert ist.

13. Behälter nach einem der Ansprüche 1 bis 12,
**dadurch gekennzeichnet, dass**
der Deckel (10) einen umlaufenden Außenrand (45) besitzt, mit dem er an einem Unterteil (50) des Behälters (30) anbringbar ist, und dass die Verschlusseinrichtung (5) in einem mittleren Bereich des Deckels (10) beabstandet vom umlaufenden Au-Benrand (45) angeordnet ist.

14. Behälter nach einem der Ansprüche 1 bis 13,
**dadurch gekennzeichnet, dass**
der Vorsprung (6, 7) zumindest eines der beiden Griffelemente (1, 2) so ausgebildet ist, dass er bei geöffnetem, insbesondere hochgeschwenktem Griffelement ein ungehindertes Austreten von Luft und/oder Dampf aus dem ansonsten durch den Deckel (10) verschlossenen Behälter (30), insbesondere zum Erhitzen von Lebensmitteln in einer Mikrowelle ermöglicht.

15. Behälter nach einem der Ansprüche 1 bis 14,
**dadurch gekennzeichnet, dass**
der Vorsprung (6, 7) zumindest eines der beiden Griffelemente (1, 2) als auf der Unterseite des Griffelements angeordneter Dorn (3) ausgebildet ist, dessen laterale Außenmaße auf die Innenmaße der jeweiligen Lochöffnung (11, 12) abgestimmt sind.
